## Europäisches Patentamt
## European Patent Office
## Office européen des brevets

(19)

(11) Publication number: **0 087 229**

**B1**

(12) **EUROPEAN PATENT SPECIFICATION**

(45) Date of publication of patent specification: **24.05.89**

(51) Int. Cl.⁴: **B 01 D 47/06, F 02 C 7/052**

(21) Application number: **83300521.8**

(22) Date of filing: **02.02.83**

(54) Separating devices and methods.

(30) Priority: **02.02.82 GB 8202879**

(43) Date of publication of application:
**31.08.83 Bulletin 83/35**

(45) Publication of the grant of the patent:
**24.05.89 Bulletin 89/21**

(84) Designated Contracting States:
**DE FR GB IT NL**

(56) References cited:
**EP-A-0 046 455**
**DD-A- 135 568**
**US-A-4 175 933**

(73) Proprietor: **PARMATIC FILTER CORPORATION**
**92 Newark Pompton Turnpike**
**Wayne New Jersey 07470 (US)**

(72) Inventor: **Mavros, Stratos**
**585 Farmdale Road**
**Franklin Lakes New Jersey 07417 (US)**
Inventor: **Cary, Boyd Balford**
**12013 Gary Hill Drive**
**Fairfax Virginia 22030 (US)**

(74) Representative: **Woodin, Anthony John et al**
**Fitzpatricks Europe House Box No. 88 World**
**Trade Centre East Smithfield**
**London E1 9AA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to separating devices and methods for removing solid and liquid contaminants from gaseous streams fed to a gas turbine without the separator means becoming fouled, as well as to a gas turbine installation having a separating device disposed in the air inlet thereof. The invention relates, particularly but not exclusively, to the cleaning of gas turbine combustion air in such difficult environments as offshore oil rigs or coastal desert operation or shipboard operation off desert coasts.

Sea salt and solid particles contained in intake air to gas turbines have a deleterious effect upon their operation. Particular difficulty occurs in removing a combination of sea salt aerosols and high concentrations of solid particles in the form of mud chemicals, dust and sand. One proposal for protecting gas turbines in marine environments utilizes a three stage system, consisting of hooked vanes, coalescer pad, and additional hooked vanes arranged in series in the direction of the air flow. That three stage system is a compact, high velocity moisture separator having a limited efficiency for removing small solid particles and a very limited dust-holding capacity. In the aforementioned environments, this type of separator is prone to rapid clogging by the high solids content of the air.

This invention has for an object to provide for means for self-cleaning, high efficiency removal of sea salt aerosols and solid particles to give protection for gas turbines operating in the above environments.

In one aspect, the invention provides a method of removing particles entrained in the gas stream fed to a gas turbine, in which liquid is sprayed into the gas and into contact with the particles, and the liquid and the particles contacted thereby are then removed from the gas stream by separating means,

characterised in that the gas stream contacts the separating means at a face velocity of between 4.572 and 10.67 meters per second (15 and 35 ft per second),

in that the liquid spray has a mass mean particle diameter of at least 10 micrometres, and

in that the separating means comprises an impact filtering pad which is formed of layers of knitted mesh material made of filaments each having a diameter greater than 25.4 micrometres (0.001 inch) and less than 152 micrometres (0.006 inch), said mesh material having between 2 and 10 stitches per centimetre (5 and 25 per inch).

The invention also provides a separating device for removing particles entrained in a gas turbine intake gas stream having a velocity between 4.572 and 10.67 metres per second (15 and 35 ft per second), the device comprising liquid spray means disposed upstream of separating means for removing liquid and particles from the gas stream,

characterised in that the spray means provides a spray having a mass mean particle diameter of at least 10 micrometres, and

in that the separating means comprises an impact filtering pad which is formed of layers of knitted mesh material made of filaments each having a diameter greater than 25.4 micrometres (0.001 inch) and less than 152 micrometres (0.006 inch), said mesh material having between 2 and 10 stitches per centimetre (5 and 25 per inch).

The fluid spray, such as sea water, saturates an area with droplets of a particular size to best provide a wash for airborne solids. The spray droplets are optimized to provide a uniform, in-depth penetration of the filter pad where the pollutants are removed from the air stream.

The following is a description, by way of example, of an embodiment of the invention, reference being made to the accompanying schematic drawings, in which

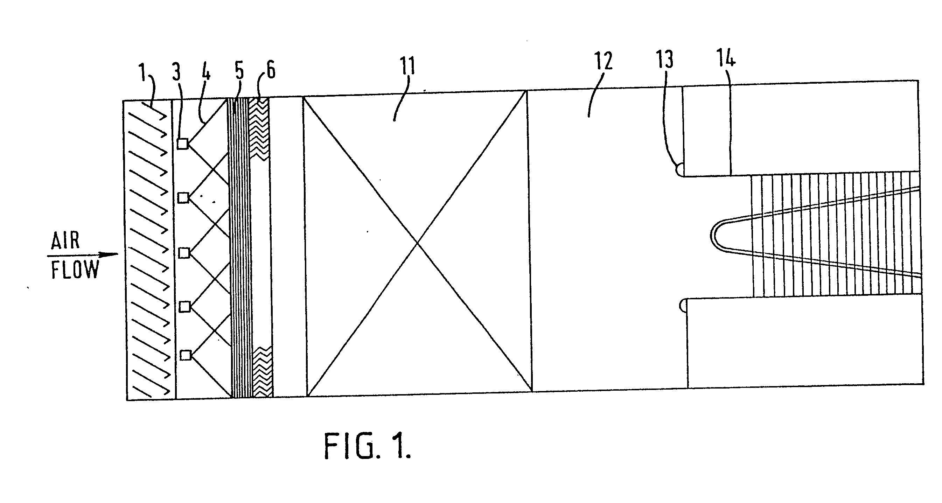

Fig. 1 is a sectional plan view of a separating device in accordance with the invention installed in the air duct of a gas turbine, and

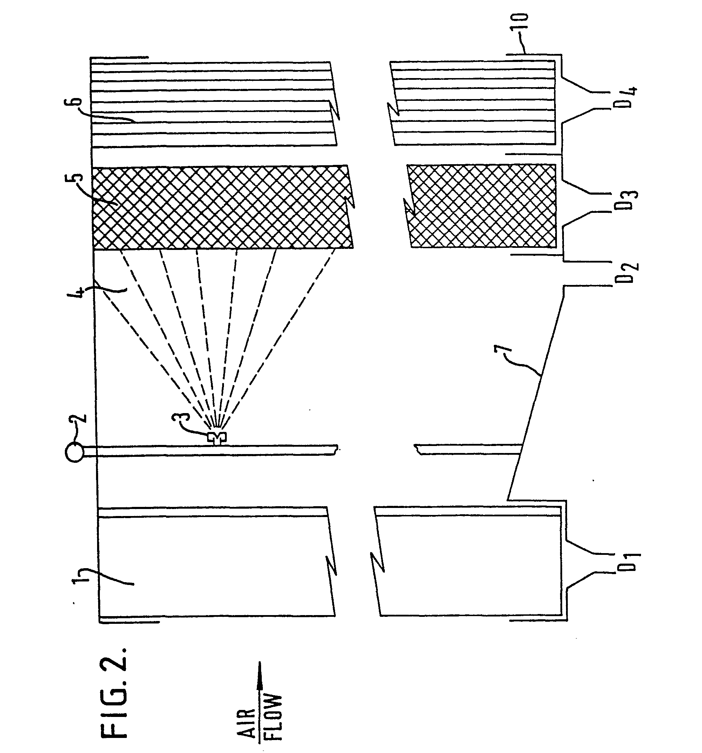

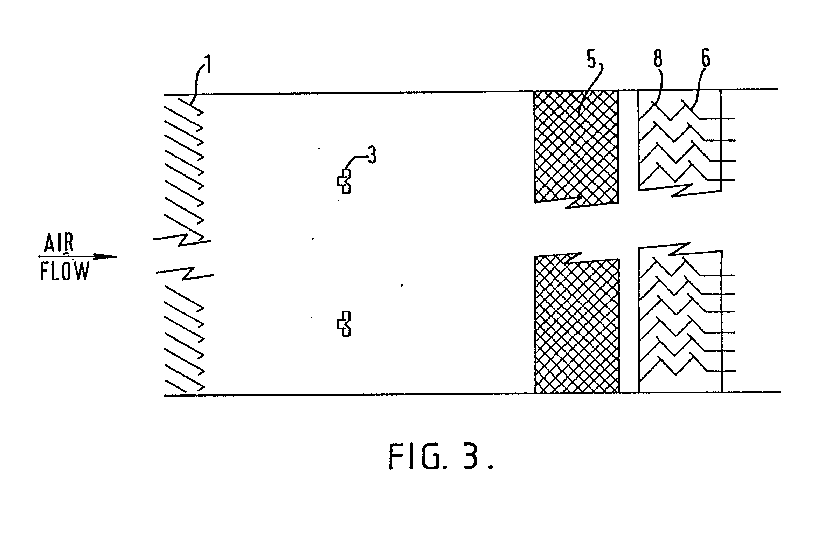

Figs. 2 and 3 are sectional side and plan views on a larger scale of the separating device of Fig. 1.

The separating device shown in the drawings is a self-cleaning device for removing contaminants from gas streams fed to a gas turbine, particularly from gas turbine combustion air. It has a sea water wash and a sea water impregnated separator for removing sea water from the air stream. The device has initial protecting means at the inlet to the air duct in the form of vertical slats 1 set at an angle to the air flow in such a way as to cause a change of direction of the air flow, thereby eliminating the requirement for snow hoods and also providing protection and separation from snow and rain. In areas of heavy solid pollutants these slats will be irrigated to prevent fouling. The trailing edge of each slat is a vertical pocket which drains liquids from the surface of the slat to a drain box at the base of the slats. The depth of each of the slats, in the direction of the air flow, will be between $2.54 \times 10^{-2}$ and $2.54 \times 12 \times 10^{-2}$m (1 and 12 inches). The slat spacing (pitch) will be in the range of $2.54 \times 10^{-2}$ and $2.54 \times 12 \times 10^{-2}$m (1 to 12 inches). Preferably, the slats will be $2.54 \times 6 \times 10^{-2}$m (6 inches) deep, and spaced $2.54 \times 6 \times 10^{-2}$m (6 inches) apart.

The slats are made of material resistant to the environment. Preferably, they are made of marine grade aluminium or 316 stainless steel.

Immediately downstream of the protecting means is arranged a matrix of fluid nozzles 3, which generate a spray 4 of small droplets of sea water into the air stream, the spray being co-current (as shown in the drawings) and/or counter-current. The spray nozzles can be hydraulically or pneumatically controlled. The nozzles are supplied with sea water from a manifold arrangement 2. The sea water spray generated has a mass mean diameter of 10 micrometres or greater in order to maximize small particle capture by collision with and encapsulation of contaminants by the salt water droplets. The spray nozzles are also arranged to provide uniform coverage of a knitted mesh pad impact filter 5. The increase in pressure drop due to spray is kept at a minimum by a system which automatically adjusts the spray pressure to a value determined by wind tunnel tests for each inlet velocity. The droplets penetrate deeply into the pad. The floor 7 of the spray chamber is sloped to ensure drainage of the water and pollutants which fall out in this area.

High efficiency removal of contaminants is carried out by means of the knitted mesh 5. The knitted mesh can be manufactured from either metal or synthetic weltable fibre of diameter greater than $2.54 \times 10^{-5}$m (0.001 inches) and less than $6 \times 2.54 \times 10^{-5}$m (0.006 inches) knitted into a mesh of between 2 and 10 stitches per centimetre (5 and 25 per inch). The knitted mesh preferably contains a crimp to ensure separation of the superimposed layers which go to make up the pad. The pad is made up of layers of crimped knitted mesh material with the crimp of alternate layers oppositely handed. The layers of the pad are supported in a frame which is fixed in the duct on the upstream side of the final separating stage.

Preferably, the fibres forming the layers of the pad are comprised of Monel wire. Monel is especially useful in marine applications since it is especially resistant to salt water corrosion. The fibres have been knitted together to form a mesh or grid having the fibres joined or tied together. Preferably, the diameter of the fibres is in the order of 50.8 micrometres (0.002 inches), but the diameter can range from greater than 25.4 micrometres (0.001 inches) to less than 152 micrometres (0.006 inches). With 50.8 micrometres (0.002 inch) diameter fibre it has been found with conventional knitting apparatus that there may be between 4 to 5 stitches or joints per centimetre (10 to 12 per inch) of mesh. That is, in one centimetre length of the fibre mesh there are approximately 4 to 5 fibres. The wires are desirably crimped so that each of the layers does not lie completely flat. Thus, when the layers are combined to form the pad, the layers will not lie flat against one another but, instead, will provide a cushioning or lofted medium. Preferably, the crimp is sufficient to allow no more than 8 to 10 layers per centimetre (20 to 24 layers per inch) of depth of the pad. Without the crimping of the fibres, it has been found there would be approximately 28—30 layers of fibres per centimetre (70—75 per inch) of pad depth. The reason that crimping of the fibres is desirable is that, for a given number of layers, the resistance to flow will be lower and self-cleaning properties increased as the distance between adjacent layers is increased. Droplets of sea water penetrate the pad, wetting the fibres, and providing a matrix of adhesive surfaces to collect and capture small particles of dust and salt aerosols. The spray droplets penetrate deeply into the knitted mesh pad, ensuring a depth of collecting media and, hence, high efficiency and the capability to handle high concentrations of contaminants.

The continuous stream of droplets penetrating into the pad ensures that the fluid wetting the fibres is being continuously changed, i.e., it is washing the fibres. The property of the device provides for self-cleaning of the pad. The small particles are encapsulated within the fluid, and are washed out of the pad. Devices without this self-cleaning property rapidly become clogged by the build-up of solids.

The combination of pad physical properties, of mesh density, fibre diameter and the droplet size distribution of the spray, ensure that, while the spray penetrates the pad, no droplets are small enough to go through the pad without capture.

The fluid within the pad wets the fibres, and forms droplets within the interstices of the media. The mesh size and layering is such that these droplets grow large, several millimeters in diameter, before the aerodynamic drage forces entrain them into the air stream. The droplets reentrained are large, and are removed by a following arrangement of hooked vanes providing the final separating stage 6. The quantities of sea water collected by the hooked vanes is sufficient to ensure they are always running wet, thus preventing the dust-carrying droplets from drying within the system, and causing fouling and blockage.

The knitted mesh pad 5 operates wetted with sea water at high face velocity, between 4.572 and 10.67 metres per second (15 and 35 ft. per second, or 400—2100 cfm per ft.$^2$ of media frontal area).

The wetted pad, when used this way, is an excellent heat exchange medium. When operating as gas turbine protection where warm sea water can be made available, such as on oil rigs, the system can anti-ice itself by wetting with warm sea water all surfaces susceptible to icing. This ability to anti-ice itself reduces the size and complexity of the separator. The prior art requires the addition of hot air to the inlet air to anti-ice the gas turbine inlet, with all the problems of availability and capital equipment, size and costs of providing this form of anti-icing. The same heat exchange properties can be made use of as an evaporative cooler for gas turbine operation in hot climates. Significant increases in power and fuel efficiency can be gained from the use of these evaporative cooling properties of this separating device.

The optional final stage 6 of the separating device is an arrangement of hooked vanes to remove by inertial separation all droplets entrained from the pad. The impartial droplet collector consists of a plurality of multi-chevron vertical vanes parallel to each other at a pitch between $0.5 \times 2.54 \times 10^{-2}$ to $1.5 \times 2.54 \times 10^{-2}$m (0.5 to 1.5 inches) so as to remove all entrained droplets. The droplets are removed from the air stream between the vanes by impaction with the vane surfaces at points of momentum change caused by the tortuous path between the vanes, and the impacted water droplets are removed from the vane surfaces and possible reentrainment into the air stream by vertical pockets on the vanes which direct the collected water vertically to a drain box at the base of the vanes.

The vanes are made of rigid corrosion resistant material such as plastics, e.g., P.V.C., aluminium or steel. Preferably, they are made of marine grade aluminium or Cres 316 stainless steel.

The vanes penetrate into the drain box to a greater vertical depth than their depth in the direction of the air flow in order to ensure they cannot be bypassed *via* the drain box which would cause salt water to be reentrained from the drain box.

Each stage is drained separated (D1—D4) *via* manometric traps. A subsidiary system consisting of either an ejector or a suction device prevents the build-up of water and accumulation of dust by flushing one or more of the drain boxes and manometric traps.

Where water is not freely available the unit can operate on a limited self-replenishing water supply. The drained effluent can be filtered in a water treatment plant and recirculated.

To provide protection for a gas turbine 14 from combustion air contaminants, the device is preferably situated at the first part of the gas turbine inlet housing, thus protecting the entire inlet configuration (which could include inlet silencer splitters 11, acoustically lined plenum 12 and inlet flare 13). The small dimensions of this device make this preferred arrangement possible.

The device, as described, is self-cleaning, and can readily be anti-iced, and should, therefore, not give rise to levels of high differential pressure which may jeopardize gas turbine operation. However, it is standard practice in the majority of gas turbine operations to include emergency bypass doors to ensure the option of continued availability of gas turbine power.

In the prior art, doors known as "blow in" doors have been provided adjacent to the separator. These door automatically open if the differential pressure increases above a predetermined level, allowing unfiltered air to the gas turbine. However, with the separator device described above, it is possible to have the whole or part of the separator device itself comprising a "blow in" door. Preferably, the combination of knitted mesh pad 5 and inertial vane stage 6 makes up a module that is movable. This module is supported within the separator device, and locked in position. A high differential pressure across the separator device causes the release of the locking device allowing the module to move out of the airstream, so allowing unrestricted flow of air through the aperture thus produced to the gas turbine. To ensure there is no possibility of the spray fluid being ingested by the gas turbine, a liquid flow cut-off device is operated coincidentally with the separator device bypass.

Although, in one desirable embodiment shown in the drawings, the water spray is shown as co-current with the air flow, it may as previously indicated be counter-current, or a combination of co-current and counter-current spray may be used. As shown in the drawings, the spray means (3), the filter pad (5) and the inertial separator (6) are arranged in that sequence in the direction of air flow. However, if desired the sequence could be spray means (3), inertial separator (6) and filter pad (5). The illustrated embodiment has only two separating stages (5, 6), but if desired one or more separating stages could be added, or only a single stage might be provided. All of the above possibilities fall within the scope of the invention.

In referring above to only two separating stages (5, 6), it will be understood that the slats (3) are not considered to constitute separating means as used in the present invention for removing small particles.

**Claims**

1. A method of removing particles entrained in the gas stream fed to a gas turbine, in which liquid is sprayed into the gas and into contact with the particles, and the liquid and the particles contacted thereby are then removed from the gas stream by separating means,
characterised in that the gas stream contacts the separating means at a face velocity of between 4.572 and 10.67 meters per second.
in that the liquid spray has a mass mean particle diameter of a least 10 micrometres, and
in that the separating means comprises an impact filtering pad (5) which is formed of layers of knitted mesh material made of filaments each having a diameter greater than 25.4 micrometres and less than 152 micrometres, said mesh material having between 2 and 10 stitches per centimetre.

2. A method according to Claim 1, in which the layers of mesh material are crimped, and the crimp of alternate layers is oppositely handed.

3. A method according to Claim 2, in which the crimp is sufficient to allow no more than 20 to 24 layers per 2.54 centimetres of depth of the pad (5).

4. A separating device for removing particles entrained in a gas turbine intake gas stream having a velocity between 4.572 and 10.67 metres per second, the device comprising liquid spray means (3) disposed upstream of separating means (5) for removing liquid and particles from the gas stream,
characterised in that the spray means (3) provides a spray having a mass mean particle diameter of at least 10 micrometres, and
in that the separating means comprises an impact filtering pad (5) which is formed of layers of knitted mesh material made of filaments each having a diameter greater than 25.4 micrometres and less than 152 micrometres, said mesh material having between 2 and 10 stitches per centimetre.

5. A separating device according to Claim 4, wherein the separating means also comprises inertia separating means (6) disposed downstream of the pad (5), and the separating means comprises only the pad (5) and means (6).

6. A gas turbine installation having a separating device according to either of Claims 4 and 5 disposed in the air inlet thereof.

**Patentansprüche**

1. Eine Methode zur Beseitigung von in einem Gasstrom mitgeführte Partikel zur Einleitung in eine Gasturbine, wobei Flußigkeit in das Gas eingesprüht wird, die mit den Partikeln in Berührung kommt, Flüßigkeit und von ihr aufgenommene Partikel werden mittels einer Trennvorrichtung aus dem Gasstrom entfernt. Diese Methode hat folgende Kennzeichen:

—Kontakt das Gasstroms mit Trennvorrichtung bei einer Nenngeschwindigkeit von zwischen 4,572 und 10,67 m/s.

—Mittlerer Massendurchmesser der Partikel mindestens 10 Micrometer.

—Trennvorrichtung umfaßt ein Druckfilterpolster (5), das aus Schichten von gestrecktem Netzmaterials besteht, welches aus Filamenten zusammengesetzt ist, deren Durchmesser über 25,5 aber unter 152 Micrometer sind. Das o.g. Netzmaterial hat zwischen 2 und 10 Maschen proc cm.

2. Eine wie in Behauptung 1 beschriebene Methode, bei der die Schichten des Netzmaterials gekräuselt sind, und die Kräuselung der sich abwechselnden Schichten in entgegengestzter Richtung verläuft.

3. Eine wie in Behauptung 2 beschriebene Methode, bei der die Kräuselung gerade so groß ist, daß nicht mehr als 20 bis 24 Schichten auf je 1 cm Polstertiefe kommen (5).

4. Eine Trennvorrichtung zur Beseitigung von in einem Gasstrom mitgeführte Partikel zur Einleitung in eine Gasturbine mit einer Geschwindigkeit von 4,572 und 10, 67 m/s; die Trennvorrichtung bestehend aus einer Flüßigkeitseinsprühvorrichtung (3), der Trennvorrichtung vorgeschaltet (5), zur Entfernung von Flüßigkeit und Partikel aus dem Gasstrom. Die Methode hat die folgenden Kennzeichen:

Sprühvorrichtung mit Sprühkopf zum Durchlaß von Partikel mit einem durchschnittlichen Massehdurchmesser von mindestens 10 Micrometer, und

Filterpolster (5) in Trennvorrichtung, bestehend aus Schichten gestrickten Netzmaterials aus Filamenten von einem Durchmesser über 25.4 Micrometer, aber unter 152 Micrometer, wobei das Netzmaterial 2 bis 10 Maschen pro cm aufweist.

5. Eine Trennvorrichtung wie in Behauptung 4 beschrieben, wobei Trennvorrichtung auch trägen Trennteil (6) umfaßt, der dem Polster (5) nachgeschaltet ist, und die Trennvorrichtung nur Polster (5) und Vorrichtung (6) umfaßt.

6. Eine Gasturbinenanlage, die Trennvorrichtung wie in Behauptung 4 und 5 beschrieben umfaßt, die in der Luftzufuhr der Anlage installiert ist.

**Revendications**

1. Une méthode d'enlèvement des particules entraînées dans le jet de gaz alimentant une turbine à gaz, par laquelle un liquide est vaporisé dans le gaz et entre en contact avec les particules, le liquide et les particules ainsi mis en contact étant ensuite enlevées du jet de gaz par des moyens de séparation,

caractérisée par le fait que le jet de gaz entre en contact avec les moyens de séparation à une vitesse nominale de 4,572 à 10,67 mètres per seconde,

par le fait que la vaporisation du liquide a un diamètre de particule de masse moyen d'au moins 10 micromètres, et

par le fait que les moyens de séparation comprennent un tampon de choc filtrant (5) formé de couches d'un tissue à mailles tricotées composé de filaments ayant chacun un diamètre supérieur à 25,4 micromètres et inférieur à 152 micromètre, ledit tissu ayant de 2 à 10 mailles par centimètre.

2. Une méthode selon la Demande 1, par laquelle les couches du tissue à mailles sont serties, et le sertissage des couches alternées est symétriquement opposé.

3. Une méthode selon la Demande 2, par laquelle le sertissage est suffisant pour permettre de 20 à 24 couches maximum pour chaques 2,54 centimètre d'épaisseur du tampon (5).

4. Un mécanisme de séparation pour enlever les particules entraînées dans une admission de jet de gaz dans une turbine à gaz, ayant une vitesse de 4,572 à 10,67 mètres par seconde, ce mécanisme comprenant des moyens de vaporisation d'un liquide (3) disposés au-dessus des moyens de séparation (5) pour enlever le liquide et les particules du jet de gaz.

caractérisé par le fait que ces moyens de vaporisation (3) fournissent une vaporisation ayant une diamètre de particule de masse moyen d'au moyens 10 micromètres, et

par le fait que ces moyens de séparation comprennent un tampon de choc filtrant formé de couches d'un tissue à mailles tricotées composé de filaments ayant chacun un diamètre supérieur à 25,4 micromètres et inférieur à 152 micromètres, ledit tissu à mailles ayant de 2 à 10 mailles par centimètres.

5. Un mécanisme de separation selon la Demande 4, dans laquelle les moyens de séparation comprennent aussi des moyens de séparation par inertie (6) disposés en-dessous du tampon (5), et les moyens de séparation n comprennent que le tampon (5) et les moyens (6).

6. Une installation de turbine à gaz disposant d'un mécanisme de séparation selon les Demandes 4 ou 5, disposé dans son orifice d'arrivée de l'air.

FIG. 1.

EP 0 087 229 B1

FIG. 2.

AIR FLOW

1  2  3  4  5  6  7  10

$D_1$  $D_2$  $D_3$  $D_4$

EP 0 087 229 B1

FIG. 3.